# EUROPÄISCHE PATENTSCHRIFT

(11) **EP 0 750 829 B1**
(45) Veröffentlichungstag und Bekanntmachung des Hinweises auf die Patenterteilung: **17.05.2000**
(21) Anmeldenummer: 95912133.6
(22) Anmeldetag: 13.03.1995
(51) Int. Cl.: H04Q 11/04, H04Q 3/545

(54) **MODULAR STRUKTURIERTES ATM-KOMMUNIKATIONSSYSTEM MIT KOMMUNIKATIONSMODULEN**
ATM-COMMUNICATION SYSTEM WITH A MODULAR STRUCTURE AND COMMUNICATION MODULES
SYSTEME DE COMMUNICATION A MODE DE TRANSFERT ASYNCHRONE ET A STRUCTURE MODULAIRE CONSTITUEE DE MODULES DE COMMUNICATION

(30) Priorität: 16.03.1994 DE 4408974
(43) Veröffentlichungstag der Anmeldung: 02.01.1997
(73) Patentinhaber: SIEMENS AKTIENGESELLSCHAFT, 80333 München (DE)
(72) Erfinder: LESCH, Hilmar, D-82515 Wolfratshausen (DE); KIRCHBERGER, Klaus, D-81379 München (DE); STÖCKL, Werner, Dr., D-82065 Baierbrunn (DE); ROMBACH, Horst, D-12161 Berlin (DE)
(86) Internationale Anmeldenummer: DE9500342
(87) Internationale Veröffentlichungsnummer: WO9525411

(56) Entgegenhaltungen:
- NEW ORLEANS SUPERCOMM/ICC '94. SERVING HUMANITY THROUGH COMMUNICATIONS. 1994 IEEE INTERNATIONAL CONFERENCE ON COMMUNICATIONS. CONFERENCE RECORD (CAT. NO.94CH3403-3), PROCEEDINGS OF ICC/SUPERCOMM'94 - 1994 INTERNATIONAL CONFERENCE ON COMMUNICATIONS, N, ISBN 0-7803-1825-0, 1994, NEW YORK, NY, USA, IEEE, USA, Seiten 278-282 vol.1, XP 000438925 LA PORTA T F ET AL 'Design and implementation of a distributed call processing architecture'
- AT&T TECHNICAL JOURNAL, NOV.-DEC. 1993, USA, Bd. 72, Nr. 6, ISSN 8756-2324, Seiten 39-47, PASHAN M A ET AL 'Technologies for broadband switching'

## Beschreibung

Modular strukturierte ATM-Kommunikationssysteme dienen der Verbindung von Kommunikationsendgeräten mit hohen Übermittlungsraten in privaten und öffentlichen Kommunikationsnetzen. Die Übermittlung und Vermittlung der Nachrichten erfolgt gemäß dem Asynchron-Transfer-Modus (ATM), bei dem die zu übermittelnden Informationen paketweise, d.h. mit Paketen fester Länge (Zellen) gemäß dem CCITT-Standard I.361 über- bzw. vermittelt werden. International standardisierte Transportbitraten sind derzeit 155 und 622 Mbit/s. Mit Hilfe von in den Zellköpfen der Zellen eingefügten Kanal- und Wegeinformationen werden die Zellen über einen virtuellen Übertragungskanal von einem Kommunikationsendgerät über zumindest ein Kommunikationssystem zu einem bestimmten Kommunikationsendgerät übermittelt. Der Übertragungskanal wird durch eine Teilnehmersignalisierung - wie in den bekannten Zeitmultiplex-Kommunikationssystemen - oder durch eine administrative Eingabe am Kommunikationssystem eingerichtet und bleibt für die Dauer der Verbindung logisch erhalten. Die Bandbreite eines derartigen Übertragungskanals ist flexibel und wird beim Verbindungsaufbau beantragt. Derartige Grundfunktionen von ATM-Kommunikationssystemen sind aus der Druckschrift "ATM Technologie für zukünftige Breitbandnetze", Siemens, 1992 bekannt.

Aus der Druckschrift ICC '94, 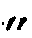 Design and Implementation of a Distributed Call Processing Architecture" ist bereits eine ATM-Kommunikationsnetzstruktur bekannt, bei der die ATM-Kommunikationsendgeräte einerseits mit einer die Durchschaltung bewirkenden ATM-Kommunikationssystem und andererseits über ein lokales Netzwerk mit einem die Anrufsteuerung realisierenden Server und mit einem die Verbindungssteuerung realisierenden Server verbunden ist. In den ATM-Kommunikationsendgeräten, im Anruf- und Verbindungssteuerungsserver sowie im ATM-Kommunikationssystem ist jeweils ein Programm mit den bekannten, standardisierten ATM-Funktionen vorgesehen. Bei dieser ATM-Kommunikationsnetzstruktur wird die ATM-Verbindungssteuerung und ATM-Informationsübertragung über unterschiedliche Kommunikationsnetze abgewickelt.

Für die Realisierung insbesondere kleinerer ATM-Kommunikationssysteme ist eine Trennung des Kommunikationssystems in eine die Vermittlung der angeschlossenen ATM-Kommunikationsendgeräte bewirkende Vermittlungseinrichtung und in eine die Verbindungssteuerung der ATM-Kommunikationsendgeräte bewirkende sowie das Kommunikationssystem adminstrierende und überwachende Steuereinrichtung vorgeschlagen worden, wobei die Steuereinrichtung durch einen Personalcomputer realisierbar ist. Der Meldungsaustausch zwischen der Vermittlungs- und der Steuereinrichtung wird mit Hilfe eines in der Vermittlungseinrichtung integrierten Kommunikationsmoduls und eines in der Steuereinrichtung eingefügten Kommunikationsadapters gesteuert.

Die der Erfindung zugrunde liegende Aufgabe ist darin zu sehen, für ein derartig modular strukturiertes Kommunikationssystem eine modulare Programmstruktur auszugestalten. Die Aufgabe wird durch die Merkmale des Patentanspruchs 1 gelöst.

Der wesentliche Aspekt der erfindungsgemäßen Programmstruktur ist darin zu sehen, daß durch die Trennung der Vermittlungs-, Betriebs- und Sicherheitssoftware in Zentrale Vermittlungs-, Betriebs- und Sicherheits-Programmstrukturen und dezentrale Vermittlungs-, Betriebstechnik- und Sicherheitstechnik-Subprogrammnstrukturen eine weitgehende Entkopplung der prozedurbezogenen und der hardwarebezogenen Programmodule erreicht wird. Hierdurch sind die vermittlungs-, betriebs- und sicherheitstechnischen Prozeduren in einer übergeordneten, abstrakten Ebene in der Steuereinrichtung realisierbar. Dies bedeutet zum einen eine erhebliche Verminderung des Umfangs der zentralen vermittlungs-, betriebs- und sicherheitstechnischen Programmstrukturen und zum anderen eine weitgehende Unabhängigkeit dieser Programmstruktur von der physikalischen Realisierung in der Vermittlungseinrichtung. Darüber hinaus wird durch diese Programmkonzeption der Meldungsfluß zwischen der Steuer- und der Vermittlungseinrichtung erheblich reduziert.

Desweiteren wird durch das Implementieren eines Transport-Programmoduls und eines Meldungsverteil-Programmoduls in der Vermittlungseinrichtung und eines Transport-Programmoduls sowie eines Prozeßverwaltungs-Programmoduls in der Steuereinrichtung die Programmodularität erhöht, d.h. das Hinzufügen und Entfernen von Programmodulen erleichert, wobei erforderliche Änderungen in implementierten Programmodulen gering bleiben.

Im folgenden wird die erfindungsgemäße Programmstruktur anhand von fünf Blockschaltbilder näher erläutert. Dabei zeigen
- Fig. 1: die der erfindungsgemäßen Programmstruktur zugrundeliegende Hardwarestruktur eines ATM-Kommunikationssystems,
- Fig. 2: die Programmstruktur für ein ATM-Kommunikationssystem nach Fig. 1,
- Fig. 3: die Programmstruktur im Kommunikationsmodul der Vermittlungseinrichtung nach Fig. 1,
- Fig. 4: die Programmstruktur in einer Steuereinrichtung nach Fig. 1,
- Fig. 5: die Programmstruktur in einem Kommunikationsadapter nach Fig. 1

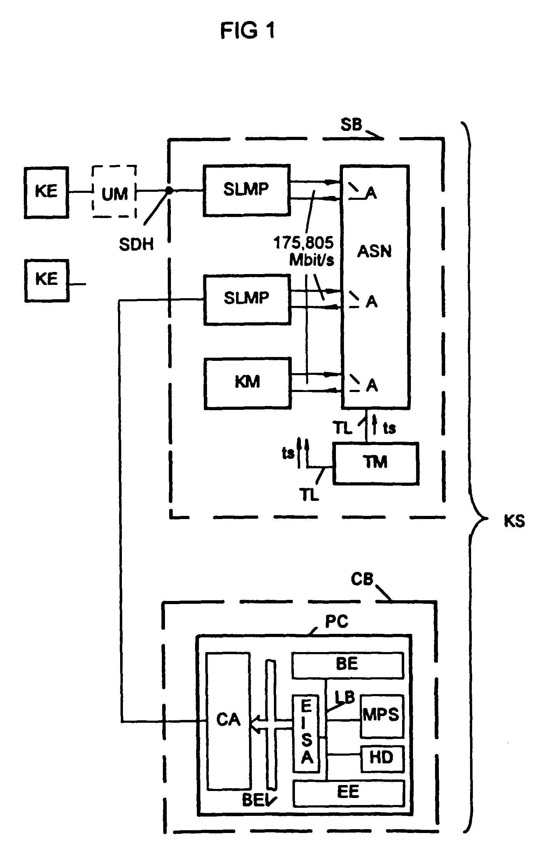

Fig. 1 zeigt ein Kommunikationssystem KS, das durch eine Vermittlungseinrichtung SB und durch eine Steuereinrichtung CB gebildet ist.

In der Vermittlungseinrichtung SB ist ein nach dem Asynchron-Transfer-Modus wirkendes ATM-Koppelfeldmodul ASN, mehrere Teilnehmeranschlußmodule SLMP, ein Kommunikationsmodul KM und ein Taktmodul TM angeordnet.

Das ATM-Koppelfeldmodul ASN ist beispielsweise mit sechzehn bidirektionalen Anschlüssen A mit einer Übertragungsgeschwindigkeit von je 175,805 Mbit/s ausgelegt. Für die Vermittlung von nach dem Asynchron-Transfer-Modus gebildeten Zellen werden diese entsprechend den mitgeführten vermittlungstechnischen Informationen über das ATM-Koppelfeldmodul ASN gemäß dem Selbstvermittlungsprinzip vermittelt. Dies bedeutet, daß eine Zelle mit Hilfe der mitgeführten vermittlungstechnischen Informationen - z.B. in einem vorangestellten, zusätzlichen Zellkopf - selbständig über das Koppelfeldmodul ASN vermittelt werden. An jeden der sechzehn Anschlüsse A des prozessorgesteuerten ATM-Koppelfeldmoduls ASN werden die Informationen physikalisch durch "Differential shifted ECL(Emitter Coupled Logic)-Signale, NRZ(Non Return to Zero)-codiert übertragen. Das ATM-Koppelfeldmodul ASN ist beispielsweise gemäß dem in der EP 0 329 005 B1 offenbarten Koppelfeld realisiert.

An jeden der sechzehn Anschlüsse A ist ein Teilnehmeranschlußmodul SLMP oder ein Kommunikationsmodul KM anschließbar, wobei in einer Vermittlungseinrichtung SB ein Kommunikationsmodul KM vorgesehen ist. In der Fig. 1 sind beispielhaft für maximal 15 anschließbare Teilnehmeranschlußmodule SLMP zwei dargestellt.

Im Taktmodul TM werden für den Betrieb des ATM-Koppelfeldmoduls ASN, der Teinehmeranschlußmodule SLMP und des Kommunikationsmoduls KM erforderliche Taktsignale ts gebildet und über separate Taktleitungen TL an die jeweiligen Komponenten der Vermittlungseinrichtung SB übertragen. Insbesondere sind diese Taktsignale ts für den Betrieb der in den Komponenten SLMP, ASN, KM der Vermittlungseinrichtung SB eingesetzten Mikroprozessoren und für die Übertragung der Informationen über die vermittlungseinrichtungsgemäßen Schnittstellen vorgesehen.

Für den Anschluß von nach dem Asynchron-Transfer-Modus wirkenden Kommunikationsendgeräten KE sind die Teinehmeranschlußmodule SLMP mit einer SDH(Synchrone Digitale Hierarchie)-Schnittstelle SDH mit einer Übertragungsgeschwindigkeit von 155 Mbit/s ausgestattet. Die Daten- bzw. Informationsübermittlung über die SDH-Schnittstelle SDH wird gemäß der CCITT-Empfehlung I.121 (User Network Interface UNI) im Synchron-Transfer-Modus (STM-1) mit einer Übertragungsgeschwindigkeit von 155,52 Mbit/s durchgeführt.

Durch ein zwischen das Kommunikationsendgerät KE und das Teilnehmeranschlußmodul SLMP eingefügtes, strichliert dargestelltes Rechteck sind Übertragungsmodule UM angedeutet, mit deren Hilfe entfernte Kommunikationsendgeräte KE an die Vermittlungseinrichtung SB angeschlossen werden. Die Übertragungsmodule UM enthalten übertragungstechnische Einrichtungen - nicht dargestellt - für eine elektrische Übertragung der zellenorientierten Informationen über Koaxialkabel gemäß der CCITT-Empfehlung G.703 oder für eine optische Übertragung über Lichtwellenleiter nach den CCITT-Empfehlung G.957/958.

Derartig breitbandige Kommunikationsendgeräte KE für den Anschluß an die Vermittlungseinrichtung SB sind durch eine Vielzahl von Einrichtungen realisierbar. Beispielhaft sind Anschlüsse an weitere ATM-Kommunikationssysteme KS, Adapter für den Anschluß von lokalen Netzen, ISDN-Vermittlungseinrichtungen - z.B. an das HICOM-Vermittlungssystem - und ATM-Workstations erwähnt.

Mit Hilfe des Kommuniktionsmoduls KM werden die von der Steuereinrichtung CB oder an diese zu übermittelnde Zellen gesteuert. Hierzu ist im Kommunikationsmodul KM eine Schicht 2 - Funktion entsprechend dem ISO - Schichtenmodell und eine für die Vermittlung der Zellen innerhalb der Vermittlungseinrichtung SB vorgesehene Schicht 3- Funktion realisiert. Desweiteren umfaßt das Kommuniktionsmodul KM eine vermittlungstechnische Subfunktion, mit deren Hilfe von der Steuereinrichtung CB und umgekehrt übermittelte vermittlungstechnische, administrative und beriebstechnischen Meldungen in vermittlungseinrichtungskonforme Meldungen, d.h. auf die physikalische Ausgestaltung der Vermittlungseinrichtung SB bezogen, transformiert werden.

Für die Kommunikation der Vermittlungseinrichtung SB mit der Steuereinrichtung CB ist diese mit einem Kommunikationsadapter CA ausgestattet. Der Kommunikationsadapter CA ist in einem die Steuereinrichtung CB realisierenden Personalcomputer PC angeordnet. Der durch einen handelsüblichen Personalcomputer realisierte Personalcomputer PC weist bekannterweise eine Bildschirmeinrichtung BE, eine Eingabeeinrichtung EE, Massenspeichereinrichtungen HD - z.B. Hard Disks - und ein Mikroprozessorsystem MPS auf. Zusätzlich ist eine einen EISA-Bus BEI realisierendes Adaptionsmodul EISA im Personalcomputer PC integriert, wobei der Kommunikationsadapter CA an den EISA-Bus BEI angeschlossen ist. Die Komponenten BE,EE,MPS,HD,EISA des Personalcomputers PC kommunizieren über einen internen lokalen Bus LB. Beim EISA-Bus handelt es sich um einen vom internen, lokalen Bus LB entkoppelten Bus mit einer Bitbreite von 32 Bit und einer Transferrate von 33 Mbyte/s.

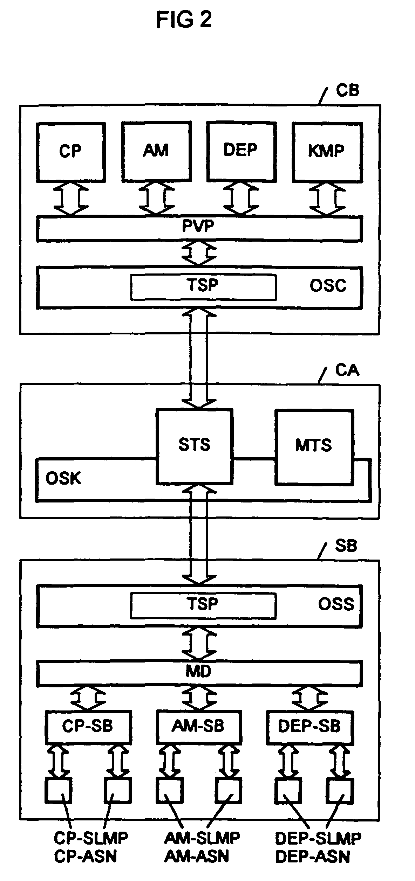

Fig. 2 zeigt die Programmstruktur eines modular strukturierten ATM-Kommunikationssystems gemäß Fig.1. In der Steuereinrichtung CB stellt das Bindeglied zur Hardware ein Multitasking-Betriebssystem OSC dar, in dem ein den Meldungstransport zur Hardware und zu Einrichtungen der Steuereinrichtung durchführendes Transport-Programmodul TSP und Hardware-Gerätetreiber realisiert sind.

In einem Prozeßverwaltungs-Programmodul PVP wird die Kommunikation zwischen den Programmstrukturen und dem Betriebssystem OSC gesteuert. Hierzu ist für die vermittlungstechnische Steuerung der Vermittlungseinrichtung SB eine Vermittlungstechnik-Programmstruktur CP, eine die Komponenten der Steuereinrichtung CB und der Vermittlungseinrichtung SB überwachende und im Störungsfall konfigurierende Sicherheitstechnik-Progammstruktur DEP und eine die Vermittlungs- und Steuereinrichtung SB, CB administrierende Betriebstechnik-Programmstruktur AM sowie ein den vermittlungstechnischen ATM-Kommunikationsnetzzugang realisierende Kommunikations-Programmstruktur KMP vorgesehen.

Der prozessorgesteuerte Kommunikationsadapter CA weist eine den Kommunikationsadapter CA überwachende Systemsteuer-Programmstruktur STS und eine den Meldungsverkehr im Asynchron-Transfer-Modus steuernde und überwachende Meldungstransfer-Programmstruktur MTS auf, wobei die beiden Programmstrukturen STS, MTS mit der Hardware des Kommunikationsadapters CA über ein Betriebssystem OSK kommunizieren.

In der Vermittlungseinrichtung SB stellt ein weiteres Betriebssystem OSS das Bindeglied zwischen den Hardwarekomponenten und den Applikations-Programmodulen dar. In diesem Betriebssystem OSS ist ein Transport-Programmodul TSP vorgesehen, mit dessen Hilfe eine Meldungs-Transportschnittstelle zwischen dem Betriebssystem und einem Meldungsverteil-Programmodul MD realisiert ist. Mit Hilfe des Meldungsverteil-Programmoduls MD werden die Meldungen innerhalb der Vermittlungseinrichtung SB zwischen den Subprogrammstrukturen gesteuert. In der Vermittlungseinrichtung SB sind eine die Verbindungen mit der Steuereinrichtung CB vermittlungstechnisch steuernden und ein die vermittlungstechnischen Meldungen an die physikalische Ausgestaltung der Vermittlungseinrichtung SB anpassende Vermittlungssteuerungs-Subprogrammstruktur CP-SB vorgesehen. Diese Vermittlungssteuerungs-Subprogrammstruktur CP-SB ist im wesentlichen im Kommunikationsmodul KM realisiert. Durch die weiteren in Fig. 2 dargestellten Programmmodule CP-SLMP und CP-ASN ist angedeutet, daß zu der Vermittlungssteuerungs-Subprogrammstruktur CB-SB kleinere Teilprogramme im Teilnehmeranschlußmodul SLMP und im ATM-Koppelfeldmodul ASN realisiert sind. Desweiteren ist in der Vermittlungseinrichtung eine die Komponenten der Vermittlungseinrichtung SB überwachende und im Störungsfall konfigurierende Sicherheitstechnik-Subprogrammstruktur DEP-SB implementiert, wobei analog zur Vermittlungssteuerungs-Subprogrammstruktur CP-SB Teilprogramme AM-SLMP, AM-ASN im Teilnehmeranschlußmodul SLMP und im ATM-Koppelfeldmodul ASM vorgesehen sind. Die Vermittlungseinrichtung SB weist weiterhin ein die virtuellen Verbindungen für den Meldungsverkehr in der Vermittlungseinrichtung SB steuernde Verbindungs-Subprogrammstruktur AM-SB auf, wobei diesen ebenfalls im Teilnehmeranschlußmodul SLMP und im ATM-Koppelfeldmodul ASN realisierte Teilprogramme AM-SLMP, AM-ASN zugeordnet sind.

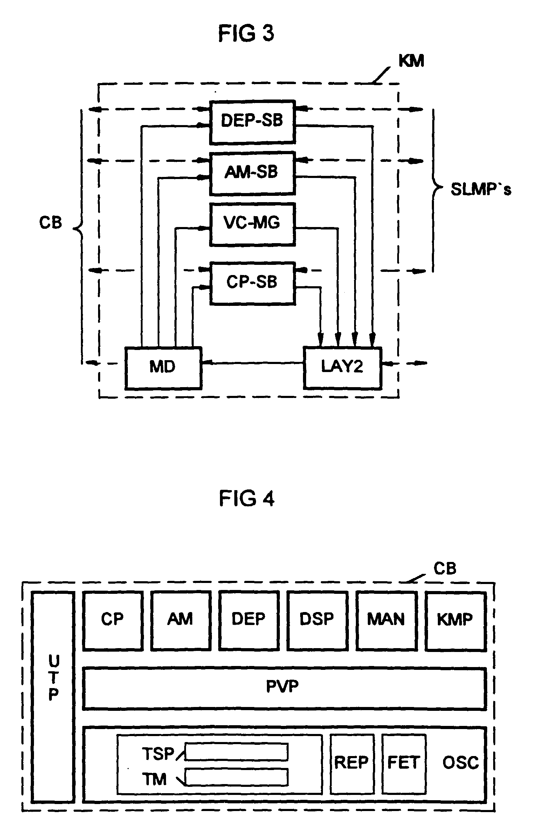

Fig. 3 zeigt die Programmstruktur im Kommunikationsmodul KM, in dem die wesentlichen Programmodule der Vermittlungseinrichtung SB realisiert sind. Wie in Fig. 1 bereits angegeben, stellen die wesentlichen Programmodule ein Sicherheitstechnik-Subprogrammodul DEP-SB, ein Betriebstechnik-Subprogrammodul AM-SB, ein Vermittlungs-Subprogrammodul CP-SB und ein Meldungsverteil-Programmodul MD dar. Desweiteren sind in Fig. 3 ein Datenübertragungs-Programmodul LAY2 und ein Verbindungsmanager-Programmodul VC-MG dargestellt. Die angegebene Softwarearchitektur basiert auf einem Prozeßkonzept. Hierbei sind die vorhergehend angegebenen Programmodule DEP-SB, AM-SB, VC-MG, CP-SB, MD, LAY2 durch individuelle Prozesse realisiert. Alle Funktionen für diese Prozesssteuerung, für eine Resourcenverwaltung sowie für eine Kommunikation zwischen den Prozessen werden von dem in Fig.1 dargestellten Betriebssystem OSS bereitgestellt. Das Betriebssystem OSS wird vorteilhaft durch das Betriebssystem COSMOS in der Version für Mikroprozessoren SAB 80386 der Fa. Siemens realisiert.

Mit Hilfe des Meldungsverteil-Programmoduls MD werden empfangene Meldungen dem jeweils zuständigen Prozess zugestellt. Hierbei wird im Rahmen der Teilnehmersignalisierung die virtuelle Kanal- und Wegeinformation der entsprechenden virtuellen Verbindung bewertet und die Meldung entsprechend der Bewertung einem Empfangsprozess zugestellt. In weiteren Fällen ist die Bewertung der Information in der Meldung erforderlich, um einem Prozess eine Meldung bzw. Information zu übermitteln. Das Meldungsverteil-Programmodul MD stellt innerhalb der Steuereinrichtung CB den im Betriebssystem OSS realisierten Transportdienst TSP zur Verfügung.

Das Verbindungsmanager-Programmodul VC-MG umfaßt alle Funktionen, die für die Verwaltung der virtuellen Verbindung im Rahmen einer ATM-Verbindung erforderlich sind. Im wesentlichen sind dies Funktionen für die Vergabe der virtuellen Wege - und Pfadinformation sowie Einstellungen der eine ATM-Verbindung realisierenden, schaltungstechnischen Komponenten. Für den Meldungsverkehr innerhalb der Vermittlungseinrichtung SB werden bei der Inbetriebnahme feste virtuelle Verbindungen zu den jeweiligen Komponenten fest eingerichtet.

Mit Hilfe des Datenübertragungs-Programmoduls LAY2 werden die Schicht-zwei-Funktionen aller über das Kommunikationsmodul KM geführten Verbindungen verwaltet, unabhängig zu welchem Zweck die Verbindung - z.B. Teilnehmersignalisierung oder ATM-Koppelfeldmodulsteuerung - vorgesehen ist.

Das Vermittlungstechnik-Subprogrammodul CP-SB bzw. der vermittlungstechnische Prozess weist keine vermittlungstechnisehen Funktionen im Bezug auf die Bewertung oder Behandlung von Schicht-drei-Meldungen auf. Diese werden transparent an die adressierten Komponenten des ATM-Kommunikationssystems weitergeleitet. Desweiteren umfaßt der vermittlungstechnische Prozess CP-SB ein physikalisches Vermittlungssystem PSS, mit dessen Hilfe und Hilfe der weiteren Komponenten der Vermittlungseinrichtung SB physikalisch Teilnehmerverbindungen eingerichtet oder getrennt werden können. Hierbei sind die in den weiteren Komponeten der Vermittlungseinrichtung SB implementierten Teilprogramme CP-SLMP, CP-ASM zu koordinieren und zu überwachen. Für den vermittlungstechnischen Informationsaustausch mit Hilfe von vermittlungstechnischen Meldungen ist eine vermittlungstechnische Schnittstelle im vermittlungstechnischen Prozess CP-SB und den Teilprogrammen realisiert. Hierbei handelt es sich um eine Meldungsschnittstelle, d.h. der Informationsaustausch zwischen den Komponenten des Kommunikationssystems erfolgt durch Übermitteln von entsprechenden Meldungen.

Das Betriebstechnik-Subprogrammodul AM-SB stellt ein Subprogramm der Betriebstechnik-Programmstruktur AM in der Steuereinrichtung CB dar. Für den Kommunikationsaustausch ist eine betriebstechnische Schnittstelle mit einem definierten Meldungsformat eingesetzt. Durch Übermitteln betriebstechnischer Meldungen werden in der Vermittlungseinrichtung SB Teilnehmeranschlüsse eingerichtet, geändert und verwaltet.

Das Sicherheitstechnik-Subprogrammodul DEP-SB bzw. der sicherheitstechnische Prozess realisiert zusammen mit der Sicherheitstechnik-Programmstruktur DEP in der Steuereinrichtung CB die sicherheitstechnischen Funktionen im ATM-Kommunikationssystem. Der sicherheitstechnische Prozess DEP-SB dient als Kommunikationspartner für die Sicherheitstechnik-Programmstruktur DEP in der Steuereinrichtung CB. Der sicherheitstechnische Prozess DEP-SB überwacht selbständig alle Komponenten der Vermittlungseinrichtung CB, nimmt evtl. Fehlermeldungen dieser Baugruppen entgegen und leiten sie zu der Sicherheitstechnik-Programmstruktur DEP der Steuereinrichtung CB weiter. Desweiteren werden von der Steuereinrichtung CB initiierte Zustandsabfragen beantwortet und bei Ausbleiben einer Antwort wird gegebenenfalls durch eine entsprechende Meldung die Vermittlungseinrichtung CB in einen definierten Ausgangszustand zurückgesetzt.

Fig. 4 zeigt die Softwarestruktur der Steuereinrichtung CB. Ein Vermittlungstechnik-Programmodul CP realisiert die wesentlichen vermittlungstechnischen Funktionen im ATM-Kommunikationssystem. Mit Hilfe eines Sicherheitstechnik-Programmoduls DEP werden die Systemintegrität und die Hardwarefunktionalitäten überwacht. Desweiteren wird eine zentrale Fehlerbehandlung für die Hardware und die Software durchgeführt. Darüberhinaus wird eine den Hardwarestatus des ATM-Kommunikationssystem repräsentierende Datenbasis verwaltet.

Mit Hilfe eines Datenserver-Programmoduls DSP werden persistente, auf Festspeichern gespeicherte Objektdaten, überwiegend Konfigurationsdaten, verwaltet. Desweiteren wird eine Schnittstelle für den Datenzugriff zur Verfügung gestellt.

Mit Hilfe eines Betriebstechnik-Programmoduls AM wird der Zugriff auf zu administrierende Komponenten des ATM-Kommunikationssystems realisiert, wobei hierfür eine Administrations-Schnittstelle für den Kommunikationsaustausch mit der Vermittlungseinrichtung SB mit einem vorgegebenen Meldungsformat zur Verfügung gestellt wird.

In einem Kommunikations-Programmodul KMP sind Funktionen für den Zugang der Steuereinrichtung zum ATM-Kommunikationsnetz realisiert. Dies sind im wesentlichen Funktionen, die eine ATM-Teilnehmersignalisierung zum ATM-Kommunikationsnetz abwickeln. Das Kommunikations-Programmodul KMP ist derart realisierbar, daß die Steuereinrichtung CB sowohl als ATM-Kommunikationsendgerät KE eines ATM-Kommunikationsnetzes als auch als Steuereinrichtung CB eines ATM-Kommunikationssystems KE eingesetzt werden kann.

Ein Management-Programmodul MAN realisiert die Managementfunktionen für das ATM-Kommunikationssystem KS und stellt hierfür eine Bedieneroberfläche zur Verfügung.

Ein Prozessverwaltungs-Programmodul PVP stellt das Bindeglied zwischen den einzelnen Prozessen bzw. Programmodulen und dem Betriebssystem dar. Zusammen mit einem Transport-Programmodul TSP im Betriebssystem OSC wird die Kommunikation zwischen den Prozessen und zur Vermittlungseinrichtung SB sichergestellt. Desweiteren werden im Prozessverwaltungs-Programmodul PVP die einzelnen Prozesse verwaltet, d.h. geladen, beendet usw..

Das Betriebssystem OSC ist beispielsweise durch ein SORIX-Betriebssystem der Fa. Siemens für Workstations realisiert. In diesem Betriebssystem OSC sind für die Kommunikation mit schaltungstechnischen Komponenten Hardware-Treibermodule TM vorgesehen. Mit Hilfe eines im Betriebssystem OSC implementierten Resourcen-Verwaltungs-Programmoduls REP werden die Systemressourcen wie beispielsweise Speicher und Plattenspeicher usw. verwaltet. Mit Hilfe eines Fehlererkennungsmoduls FET werden Systemfehler erkannt und aufgesammelt.

Für die Entwicklung, Integration, Test und Wartung des ATM-Kommunikationssystems sind in der Steuereinrichtung CB Utility-Programmodule UTP - durch ein Rechteck angedeutet - vorgesehen.

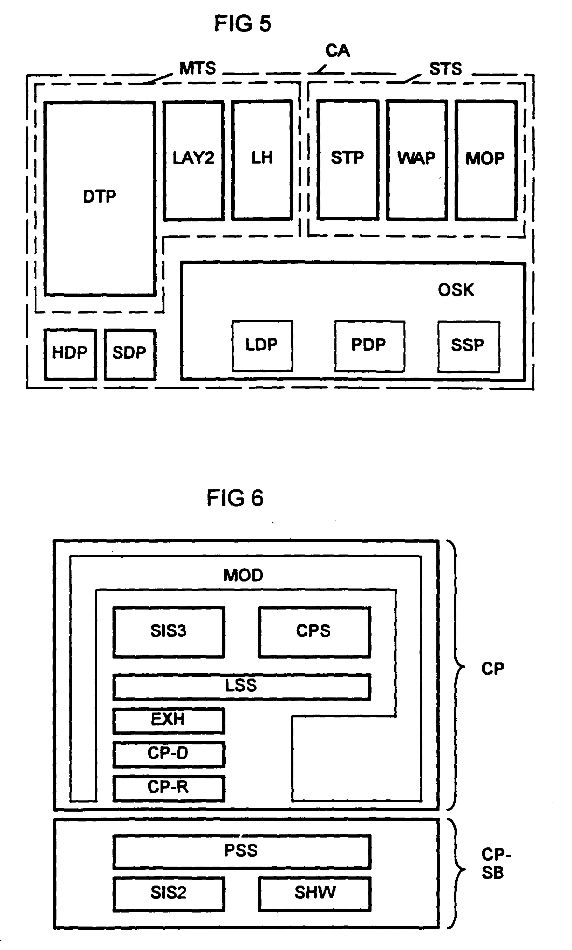

Fig. 5 zeigt die Softwarestruktur im Kommunikationsadapter CA. Als Betriebssystem OSK ist ebenfalls das Betriebssystem COSMOS in der Version für Mikroprozessoren SAB 80386 der Fa. Siemens vorgesehen.

Die Steuerung des Kommunikationsflusses über den Kommunikationsadapter CA wird im wesentlichen mit Hilfe eines Datentransfer-Programmoduls DTP bewerkstelligt. Hierbei werden im wesentlichen die virtuellen Kanal- und Wegeinformationen eingestellt, die empfangenen Datenströme in Nutz- und Steuerdaten getrennt und gegebenenfalls wieder in Zellen eingefügt, d.h. an das Segmentierungs- und Desegmentierungsmodul weitergeleitet. Unterstützt wird dieses Datentransfer-Programmodul DTP durch ein Datenübertragungs-Programmodul LAY2, mit dessen Hilfe die Sicherungsschicht 2 des nach ISO standardisierten Schicht-2-Protokolls gesteuert wird. Mit Hilfe eines Leitungs-Programmoduls LH wird die schaltungstechnisch realisierte Übertragungstechnik in Betrieb genommen und evtl. auftretende Störungen erfaßt, analysiert und entsprechende Reaktionen eingeleitet. Diese drei Programmodule zusammen bilden die Meldungstransfer-Programmstruktur MTS.

Eine Systemsteuer-Programmstruktur SPS ist durch ein Systemsteuer-Programmodul STP, ein Watchdog-Programmodul WAP und durch ein Test-Programmodul MOP gebildet. Mit Hilfe des Systemsteuer-Programmoduls STP wird die Kommunikation mit Sicherheits- und Betriebsteilprogrammodulen gesteuert, d.h. durch von der Steuereinrichtung CB übermittelte Meldungen gesteuert. Desweiteren werden mit Hilfe des Systemsteuer-Programmoduls STP die Konfigurationsdaten des Kommunikationsadapters CA verwaltet und die Bedienung des Leitungs-Programmoduls LH gesteuert. Das Watchdog-Programmodul WAP ist für das regelmäßige triggern eines Watchdogs zuständig. Mit Hilfe eines Test-Programmoduls MOP können momentane Zustände von Betriebssystem-Modulen und Anwender-Programmodulen bzw. Prozessen erfaßt und weitergeleitet werden. Desweiteren sind mit Hilfe des Test-Programmoduls MOP Inhalte von Registern anzeigbar und mit Hilfe von Schaltmitteln sind Schaltungen von Taktsignalen einstellbar.

Im Betriebssystem OSK sind in Fig. 5 drei Treiber-Programmodule dargestellt. Diese Treiber-Programmodule stellen das Bindeglied zu den jeweiligen Hardwarekomponenten dar. Im einzelnen ist dies ein Leitungstreiber LDP zur Bedienung und Interrupt-Vorverarbeitung für ein nicht dargestelltes Übertragungstechnik-Modul, ein Peripherietreiber PDP zur Bedienung von Hardware-Treibern, Interruptsteuerungen, des Watchdogs und ein Schnittstellentreiber SSP zur Ansteuerung einer eine V.24-Schnittstelle realisierenden V.24-Hardware-Steuerung.

Fig 6 zeigt eine Struktur der in dem Kommunikationssystem KS nach Fig.2 realisierten Vermittlungstechnik-Programmstruktur CP und der Vermittlungstechnik-Subprogrammstruktur CP-SB. Die Vermittlungstechnik-Programmstruktur CP ist im Programmspeicher des die Steuereinrichtung repräsentierenden Personalcomputers PC und die Vermittlungstechnik-Subprogrammstruktur CP-SB im wesentlichen im Programmspeicher des in der Vermittlungseinrichtung SB angeordneten Kommunikationsmoduls KM gespeichert.

Die Vermittlungstechnik-Programmstruktur CP ist durch ein Monitor-Programmodul MOD, ein Signalisierungs-Subprogrammodul SIS3, ein Vermittlungs-Subprogrammodul CPS, ein logisches Vermittlungs-Subprogrammodul LSS, ein Vermittlungsdaten-Programmodul CP-D, ein Vermittlungsressourcen-Programmodul CP-R und ein Fehler-Programmodul EXH gebildet. In der Vermittlungstechnik-Subprogrammstruktur CP-SB ist ein physikalisches Vermittlungs-Subprogrammodul PSS, ein weiteres Signalisierungs-Subprogrammodul SIS2 und ein Hardware-Programmodul SHW vorgesehen.

Mit Hilfe des Monitor-Programmoduls MOD werden die externen Softwareschnittstellen der Vermittlungstechnik-Programmstruktur CP zu beispielsweise zu Betriebs- und Sicherheitstechnik-Programmstrukturen gemäß Fig. 2 realisiert. Hierbei handelt es sich um meldungsorientierte Schnittstellen, d.h. ein Informations- bzw. Datenaustausch wird ausschließlich über Meldungen mit einem definierten Meldungsformat abgewickelt.

Im Signalisierungs-Subprogramniodul SIS3 ist eine Transportsteuerungs- und eine Schicht-3-Funktion enthalten. Hierbei werden die Schicht-2-Verbindungen - Schicht 2 stellt im ISO 7-Schichten-Modell die verbindungsorientierte Sicherungsschicht (beispielsweise durch HDLC-Verbindungen) dar- durch die Transportsteuerungsfunktion gesteuert. Der Transportsteuerungsfunktion sind folgende Aufgaben zugeordnet:
- Bearbeiten von Anreizen zum Auf- und Abbau von Schicht-2-Verbindungen, die für den Transport von Schicht-3-Meldungen, d.h. vermittlungstechnischen Meldungen erforderlich sind.
- Multiplexen von mehreren vermittlungstechnischen Verbindungen in einer Schicht-2-Verbindung und deren Verwaltung.
- Übergabe der Informationen von der Sicherungsschicht (Schicht 2) zur Vermittlungsschicht (Schicht 3) und umgekehrt.
- Bearbeiten von Fehlermeldungen innerhalb der Sicherungsschicht.

Die Schicht-3-Funktion repräsentiert die vermittlungstechnische Schicht, wobei in dieser ein Protokoll-Programmodul implementiert ist, das ein ATM-Signalisierungsprotokoll gemäß dem Standard "UNI Specification Draft 2.3" des ATM-Forums von 1993 realisiert. Dieses Portokoll-Programmodul stellt die Schnittstelle zwischen den vermittlungstechnischen Programmodulen und der Sicherungsschicht dar, wobei die zu übermittelnden Informatioenen und die Zustandssteuerung gemäß dem ATM-Signalisierungsprotokoll bearbeitet werden. Das Signalisierungs-Programmodul ist in zwei Protokollvarianten realisierbar. Bei einer Protokolivariante ist die Steuereinrichtung CB als Steuereinrichtung CB des Kommunikationssystems KS und bei der anderen Protokolivariante als Kommunikationsendgerät einsetzbar.

Im Vermittlungs-Subprogrammodul CPS ist für jede an einer Verbindung beteiligten Komponente des ATM- Kommunikationssystems KS ein entsprechendes Abbild verfügbar. Die Komponenten sind der Benutzer, das Gerät und ein Zugriffssegment.

Der Benutzer oder auch Teilnehmer steuert mit seinen innerhalb einer Signalisierungsprozedur übermittelten Informationen den Verbindungsauf- und -abbau sowie die Anforderung von Leistungsmerkmalen. Seine Signalisierung- bzw. Wählnummer und seine Berechtigungen zu Diensten, Leistungsmerkmalen usw. repräsentieren den Benutzer und diese Parameter sind im Vermittlungs-Subprogrammodul CPS in einem Benutzersegment für die Dauer einer Verbindung abgebildet, d.h. aus einem Segment einer Datenbasis gelesen und in dem Benutzersegment gespeichert.

Das Gerät stellt diejenige Einrichtung dar, über die ein Benutzer mit dem Kommunikationssystem KS kommuniziert. Eine derartige Einrichtung kann durch ein Kommunikationsendgerät, eine Übergangseinrichtung zu anderen Netzen, z.B. zu lokalen Netzen oder ein anderes Kommunikationssystem, z.B. eine weiteres ATM-Kommunikationssystem oder ein ISDN-Kommunikationssystem, repräsentiert sein. Die für die Beschreibung erforderlichen Parameter werden für die Dauer einer Verbindung in einem Gerätesegment abgebildet.

In ein Zugriffssegment werden durch betriebstechnische Meldungen eine Identifikation und eine vermittlungstechnische Möglichkeit - insbesondere hinsichtlich der Signalisierungsprozuduren am Kommunikationsanschluß SDH - und die dieser vermittlungstechnischen Möglichkeit zugeordnete physikalische Ressourcen von Kommunikationsanschlüssen SDH eingetragen und verwaltet.

Die vermittlungstechnischen Möglichkeiten in einem Zugriffssegment werden durch Eintragen einer die Möglichkeit einer Kommunikationseinrichtungs-Signalisierung angebende Signalisierungsinformation, einer die Signalisierungsart angebende Signalisierungsart-Information und einer eine Zuordung von virtuellen Pfaden angebende Pfadinformation definiert.

Bei einem Verbindungsaufbau werden entsprechend der von der Vermittlungseinrichtung übermittelten vermittlungstechnischen Informationen - z.B. Ursprungs- und Zieladdresse oder die Port-bzw. Kanalnummer - aus den entsprechenden Zugriffssegmenten die durch die von der angeschlossenen Kommunikationseinrichtung KE übermittelten Anforderung - z.B. Transferrate und Kanalzahl - physikalischen Ressourcen entnommen und für die Dauer einer Kommunikationsbeziehung bzw. einer Verbindung - einer Fest- oder Wählverbindung - einem logischen Anschluß-Teilsegmente zugeordnet und für die vermittlungstechnische Verarbeitung bereitgestellt. Die logischen Anschluß-Teilsegmente werden zu Verbindungssegmenten LINK zusammengefaßt. Ein Verbindungssegment LINK einschließlich einer Identifikatin ID repräsentiert somit die Gesamtheit der phyikalischen, kommunikationsanschlußbezogenen Ressourcen bzw. Eigenschaften einer an einer Verbindung beteiligten Kommunikationseinrichtung.

Im Vermittlungs-Subprogrammodul CPS werden mit Hilfe der Verbindungssegmente Verbindungen zwischen an den Kommunikationsanschlüssen angeschlossenen Kommunikationseinrichtungen auf- und abgebaut bzw. gesteuert. Da jedes Verbindungssegment jeweils eine Übertragungsrichtung bis zum Durchschaltepunkt repräsentiert, sind für eine bidirektionale Verbindungsdurchschaltung bzw. Steuerung vier Verbindungssegmente beteiligt.

Im in Fig.6 dargestellten logischen Vermittlungs-Subprogrammodul LSS werden die physikalischen Eigenschaften der ATM-Nutzkanäle - nicht der Signalisierungskanäle - zu logischen Anschlußpunkten in den durch Zugriffssegmente bzw. Anschluß-Teilsegmente gebildete Verbindungssegmenten abstrahiert. Mit den vom logischen Vermittlungs-Subprogrammodul LSS verwalteten Verbindungssegmenten kann das Vermittlungs-Subprogrammodul CPS unabhängig von den in den Verbindungssegmenten definierten physikalischen Eigenschaften die vermittlungstechnischen Funktionen realisieren. Das Vermittlungs-Subprogrammodul LSS dient somit der Entkopplung der prozeduralen von der schaltungstechnischen Vermittlungsfunktion.

In der Vermittlungstechnik-Programmstruktur CP werden die hierfür erforderlichen Daten mit Hilfe des Vermittlungsdaten-Programmoduls CP-D in persistenten, statischen und dynamischen Objekten gehalten. Daten der persistenten Objekte sind Daten, die aufgrund betriebstechnischer Meldungen im Kommunikationssystem KS abgelegt werden und auf jeden Fall über einen Restart hinweg erhalten werden müssen. Daten der statischen Objekte stellen Daten dar, die nach einem Neu- oder Restart des Kommunikationssystem KS aus den persistenten Daten abgeleitet werden. Die dynamischen Daten enthalten Informationen über Verbindungs-Programmodul-bezogene Ressourcen, Zustände und Verknüpfungsinformationen.

Im Fehler-Programmodul EXH werden die in der Vermittlungstechnik-Programmstruktur CP auftretenden Fehlermeldungen gesammelt und über das Monitor-Programmodul MOD an nicht dargestellte, sicherheitstechnische Programmstrukturen übermittelt.

Mit Hilfe des in der Vermittlungseinrichtung SB implementierten physikalischen Vermittlungs-Subprogrammoduls PSS werden die von der Steuereinrichtung CB übermittelten vermittlungstechnischen Meldungen in hardwarenahe vermittlungstechnische Meldungen umgewertet und an die entsprechenden Komponenten der Vermittlungseinrichtung SB übermittelt. Hierbei wird dem physikalischen Vermittlungs-Subprogrammodul PSS vom logischen Vermittlungs-Subprogrammodul LSS lediglich mitgeteilt, beispielsweise welcher Anschluß des ATM-Koppelfeldmoduls ASN mit welchem zu verbinden ist. Welcher physikalische Weg durch das ATM-Koppelfeldmodul ASN gewählt wird, wird durch das physikalische Vermittlungs-Subprogrammodul PSS verwaltet - einschließlich der ATM-Koppelfeldmodul-internen Ressourcen. Hierdurch ist die prozedurale Vermittlungstechnik annähernd unabhängig von den physikalischen Eigenschaften der Kommunikationsanschlüsse und kann daher separat für unterschiedlichste physikalische Ausprägungen des Kommunikationssystems KS eingesetzt werden. Desweiteren wird hierdurch eine weitgehend hardware-unabhängige Entwicklung und Pflege von Vermittlungstechnischen Programmen ermöglicht.

Mit Hilfe des weiteren Signalisierungs-Subprogrammoduls SIS2 - siehe Figur 6 - werden die an die Komponenten der Vermittlungs- oder die Steuereinrichtung SB,CB zu übermittelnden Meldungen - vermittlungs-, betriebs- oder sicherheitstechnisch - hinsichtlich Schicht 1 - physikalische Schicht - und Schicht 2 - Sicherungsschicht - bearbeitet bzw. gesteuert.

## Patentansprüche

1. Modular strukturiertes ATM-Kommunikationssystem (KS) zur Verbindung von ATM-Kommunikationsendgeräten (KE) mit
- einer Vermittlungseinrichtung (SB) mit zumindest einem Multitasking-Betriebssystem (OSS),
-- in dem ein eine Meldungs-Transportschnittstelle (TS) zwischen dem Betriebssystem und einem Meldungsverteil-Programmodul (MD) realisierendes Transport-Programmodul (TSP) verwaltet wird,
-- mit einer die Komponenten der Vermittlungseinrichtung (SB) überwachenden und im Fehlerfall konfigurierenden Sicherheitstechnik-Subprogrammstruktur (DEP-SB),
-- mit einer die virtuellen Verbindungen für den Meldungsverkehr in der Vermittlungseinrichtung (SB) steuernden Betriebstechnik-Subprogrammsturktur (AM-SB),
-- und mit einer die Verbindungen mit einer Steuereinrichtung (CB) vermittlungstechnisch steuernden und ein die vermittlungstechnischen Meldungen an die physikalische Ausgestaltung der Vermittlungseinrichtung (SB) anpassenden Vermittlungssteuerungs-Subprogrammstruktur (CP-SB),
-- wobei Meldungen innerhalb der Programmstrukturen (CP-SB, AM-SB, DEP-SB) der Vermittlungseinrichtung (SB) und zu und von der Steuereinrichtung (CB) mit Hilfe des Meldungsverteil-Programmoduls (MD) gesteuert werden, und
- mit einer Steuereinrichtung (CB) mit einem Multitasking-Betriebssystem (OSC),
-- in dem ein eine Meldungs-Transportschnittstelle (TS) zwischen dem Betriebssystem und einem Prozeßverwaltungs-Programmodul (PVP) realisierendes Transport-Programmodul (TSP) verwaltet wird,
-- mit einer die vermittlungstechnische Steuerung der Vermittlungseinrichtung (SB) bewirkenden Vermittlungstechnik-Programmstuktur (CP),
-- mit einer die Komponenten der Steuereinrichtung (CB) und Vermittlungseinrichtung (SB) überwachenden und im Fehlerfall konfigurierenden Sicherheitstechnik-Programmstuktur (DEP),
-- mit einer die Vermittlungs- und Steuereinrichtung (SB,CB) administrierenden Betriebstechnik-Programmstruktur (AM),
-- und mit einem einen vermittlungstechnischen ATM-Kommunikationsnetzzugang realisierenden Kommunikations-Programmstruktur (KMP),
- sowie mit einem die Verbindung zwischen der Steuereinrichtung (CB) und der Vermittlungseinrichtung (SB) realisierenden Kommunikationsadapter (CA) mit einem Multitasking-Betriebssystem (OSK),
-- mit einer den Kommunikationsadapter (CA) überwachenden Systemsteuer-Programmstuktur (STS) und
-- mit einer den Meldungstransfer im Asynchron-Transfer-Modus steuernden und überwachenden Meldungstransfer-Programmstuktur (MTS).

2. Kommunikationssystem nach Anspruch 1,
**dadurch gekennzeichnet,**
daß im Kommunikationsmodul (KM) zusätzlich
- ein die für den betriebs-, vermittlungs- und sicherheitstechnischen Meldungsverkehr vorgesehen virtuellen Verbindungen einrichtendes und verwaltendes Verbindungsmanagement-Programmodul (VC-MG),
- ein Meldungen an die Programmodule (CP-SB,AM-SB,DEP-SB,VC-MG) verteilendes Meldungsverteil-Programmodul (MD) und
- ein die Verbindungssicherung realisierendes Datenübertragungs-Programmodul (LAY2)
vorgesehen ist.

3. Kommunikationssystem nach Anspruch 1 oder 2,
**dadurch gekennzeichnet,**
daß in der Steuereinrichtung (CB) zusätzlich
- ein die persistenten Objektdaten auf zumindest einem Festspeicher verwaltendes Datenserver-Programmodul (DSP),
- ein die Ressourcen der Steuereinrichtung (CB) verwaltendes Ressourcen-Programmodul (REP) und
- Funktionen zur Entwicklung, Integration, Tests und Wartung bereitstellende Utilitie-Programmodule (UTP)
implementierbar sind.

4. Kommunikationssystem nach einem der Ansprüche 1 bis 3,
**dadurch gekennzeichnet,**
daß im Kommunikationsadapter (CA)
- die Systemsteuer-Programmstuktur (STS) durch
-- ein den Kommuniktionsadapter (CA) administrierendes und überwachendes Systemsteuer-Programmodul (STP),
-- ein den Watchdog überwachendes Wachdog-Programmodul (WAP)
-- und ein im Sinne des Testens des Kommunikationsdapters (CBA) mit Erfassungs-, Anzeige- Schaltfunktionen ausgestattetes Test-Programmodul (MOP) sowie
- die Meldungstransfer-Programmstruktur (MTS) durch
-- ein die Meldung vermittlungstechnisch steuerndes Datentransfer-Programmodul (DTP),
-- ein die Verbindungssicherung realisierendes Datenübertragungs-Programmodul (LAY2) und
-- ein die physikalische Übertragungstechnik steuerdes Leitungs-Programmodul (LH)
gebildet ist.

5. Kommunikationssystem nach einem der Ansprüche 1 bis 4,
**dadurch gekennzeichnet,**
daß in der Steuereinrichtung (CB)
- die Vermittlungstechnik-Programmstruktur (CP) durch
- ein die Vermittlungsfunktion zum Verbinden von angeschlossenen Kommunikationseinrichtungen (KE) realisierendes Vermittlungs-Subprogrammodul CPS,
-- ein die Schnittstelle zur Sicherheits- und Betriebstechnik-Programmstruktr realiserendes Monitor-Programmodul (MOD),
-- ein ein ATM-Teilnehmersignalisierungsprotokoll der Steuereinrichtung (CB) realisierendes Signalisierungs-Subprogrammodul (SIS3) und
-- ein das logische Vermitteln zweier ATM-Kommunikationsendgeräte (KE) bewirkendes logische Vermittlungs-Subprogrammodul (LSS)
-- und weitere Programmodule (EXH,CPD,CPR) zur Verwaltung von vermittlungstechnischen Daten und Ressourcen sowie zur Behandlung von Fehlermeldungen,
und in der Vermittlungseinrichtung (SB)
- die Vermittlungstechnik-Subprogrammstruktur (CP-SB) durch
-- ein das pysikalische Durchschalten zwischen zwei ATM-Kommunikationsendgeräten (KE) bewirkendes physikalisches Vermittlungs-Subprogrammodul (PSS),
-- ein den Meldungsverkehr sicherndes, weiteres Signalisierungs-Subprogrammodul (SIS2) und
-- ein das Bindeglied zur Schaltungstechnik darstellendes Hardware-Programmodul (SHW)
gebildet ist.

## Claims

1. ATM communication system (KS) with a modular structure for the connection of ATM communication terminals (KE),
- having a switching device (SB) with at least one multi-tasking operating system (OSS),
-- in which a transport program module (TSP), realizing a message transport interface (TS) between the operating system and a message distribution program module (MD), is managed,
-- with a dependability subprogram structure (DEP-SB), monitoring the components of the switching device (SB) and configuring them in the event of an error,
-- with an operation subprogram structure (AM-SB), controlling the virtual connections for the message traffic in the switching device (SB),
-- and with a switching control subprogram structure (CP-SB), controlling switching aspects of the connections with a control device (CB) and adapting the switching messages to the physical design of the switching device (SB),
-- messages within the program structures (CP-SB, AM-SB, DEP-SB) of the switching device (SB) and to and from the control device (CB) being controlled with the aid of the message distribution program module (MD),
- having a control device (CB) with a multi-tasking operating system (OCS),
-- in which a transport program module (TSP), realizing a message transport interface (TS) between the operating system and a process management program module (PVP), is managed,
-- with a switching program structure (CP), effecting the switching control of the switching device (SB),
-- with a dependability program structure (DEP), monitoring the components of the control device (CB) and configuring them in the event of an error,
-- with an operation program structure (AM), administering the switching device (SB) and control device (CB),
-- and with a communication program structure (KMP), realizing a switching ATM communication network access,
- and having a communication adaptor (CA), realizing the connection between the control device (CB) and the switching device (SB) and with a multi-tasking operating system (OSK),
-- with a system control program structure (STS), monitoring the communication adaptor (CA), and
-- with a message transfer program structure (MTS), controlling and monitoring the message transfer in the Asynchronous Transfer Mode.

2. Communication system according to Claim 1, characterized in that in the communication module (KM) there is additionally provided
- a connection management program module (VC-MG), setting up and managing the virtual connections intended for the operation, switching and dependability message traffic,
- a message distribution program module (MD), distributing messages to the program modules (CP-SB, AM-SB, DEP-SB, VC-MG), and
- a data transmission program module (LAY2), realizing the safeguarding of a connection.

3. Communication system according to Claim 1 or 2, characterized in that in the control device (CB) there can additionally be implemented
- a data server program module (DSP), managing the persistent object data on at least one fixed storage unit,
- a resources program module (REP), managing the resources of the control device (CB), and
- utility program modules (UTP), providing functions for development, integration, tests and maintenance.

4. Communication system according to one of Claims 1 to 3, characterized in that in the communication adaptor (CA)
- the system control program structure (STS) is formed by
-- a system control program module (STP), administering and monitoring the communication adaptor (CA),
-- a watchdog program module (WAP), monitoring the watchdog,
-- and a test program module (MOP), equipped with detecting, displaying and switching functions in the sense of testing the communication adaptor (CBA), and
- the message transfer program structure (MTS) is formed by
-- a data transfer program module (DTP), controlling switching aspects of the message,
-- a data transmission program module (LAY2), realizing the safeguarding of a connection, and
-- a line program module (LH), controlling the physical transmission technology.

5. Communication system according to one of Claims 1 to 4, characterized in that in the control device (CB)
- the switching program structure (CP) is formed by
-- a switching subprogram module (CPS), realizing the switching function for the connecting of connected communication devices (KE),
-- a monitor program module (MOD), realizing the interface with respect to the dependability and operation program structure,
-- a signalling subprogram module (SIS3), realizing an ATM subscriber signalling protocol of the control device (CB),
-- a logical switching subprogram module (LSS), effecting the logical switching of two ATM communication terminals (KE),
-- and further program modules (EXH, CPD, CPR) for the management of switching data and resources and also for the handling of error messages,
and in the switching device (SB)
- the switching subprogram structure (CP-SB) is formed by
-- a physical switching subprogram module (PSS), effecting the physical through-connection between two ATM communication terminals (KE),
-- a further signalling subprogram module (SIS2), safeguarding the message traffic, and
-- a hardware program module (SHW), representing the link with the circuit technology.

## Revendications

1. Système de communication ATM (KS) à structure modulaire pour la liaison de terminaux de communication ATM (KE), comportant
- un dispositif de commutation (SB) ayant au moins un système d'exploitation multitâche (OSS),
-- un module de programme de transport (TSP) qui met en oeuvre une interface de transport de messages (TS) entre le système d'exploitation et un module de programme de distribution de messages (MD), étant géré,
-- une structure de sous-programme technique de sécurité (DEP-SB) surveillant et configurant en cas d'erreur les composants du dispositif de commutation (SB),
-- une structure de sous-programme technique d'exploitation (AM-SB) commandant les liaisons virtuelles pour le trafic de messages dans le dispositif de commutation (SB),
-- et une structure de sous-programme de commande de commutation (CP-SB) commandant du point de vue de la technique de commutation les liaisons avec un dispositif de commande (CB) et adaptant les messages techniques de commutation à la configuration physique du dispositif de commutation (SB),
-- des messages à l'intérieur des structures de programmes (CP-SB, AM-SB, DEP-SB) du dispositif de commutation (SB) ainsi que depuis et vers le dispositif de commande (CB) étant commandés à l'aide du module de programme de distribution de messages (MD), et
- un dispositif de commande (CB) ayant un système d'exploitation multitâche (OSC),
-- un module de programme de transport (TSP), qui met en oeuvre une interface de transport de messages (TS) entre le système d'exploitation et un module de programme de gestion de processus (PVP), étant géré,
-- une structure de programme technique de commutation (CP) provoquant la commande technique de commutation du dispositif de commutation (SB),
-- une structure de programme technique de sécurité (DEP) surveillant et configurant en cas d'erreur les composants du dispositif de commande (CB) et du dispositif de commutation (SB),
-- une structure de programme technique d'exploitation (AM) gérant le dispositif de commutation (SB) et le dispositif de commande (CB),
-- et une structure de programme de communication (KMP) mettant en oeuvre un accès au réseau de communication ATM du point de vue de la technique de commutation,
- et un adaptateur de communication (CA) mettant en oeuvre la liaison entre le dispositif de commande (CB) et le dispositif de commutation (SB) et comportant un système d'exploitation multitâche (OSK),
-- une structure de programme de commande de système (STS) surveillant l'adaptateur de communication (CA) et
-- une structure de programme de transfert de messages (MTS) commandant et surveillant le transfert de messages en mode de transfert asynchrone.

2. Système de communication selon la revendication 1,
caractérisé par le fait qu'il est prévu en plus dans le module de communication (KM)
- un module de programme de gestion de liaison (VC-MG) établissant et gérant les liaisons virtuelles prévues pour le trafic de messages en technique d'exploitation, de commutation et de sécurité,
- un module de programme de distribution de messages (MD) distribuant des messages aux modules de programmes (CP-SB, AM-SB, DEP-SB, VC-MG) et
- un module de programme de transmission de données (LAY2) mettant en oeuvre la sécurité de données ou liaison de données.

3. Système de communication selon les revendications 1 ou 2,
caractérisé par le fait qu'il peut être mis en oeuvre en plus dans le dispositif de commande (CB)
- un module de programme de serveur de données (DSP) gérant les données objets persistantes sur au moins une mémoire morte,
- un module de programme de ressources (REP) gérant les ressources du dispositif de commande (CB), et
- des modules de programmes utilitaires (UTP) mettant à disposition des fonctions pour le développement, l'intégration, les tests et la maintenance.

4. Système de communication selon l'une des revendications 1 à 3,
caractérisé par le fait que, dans l'adaptateur de communication (CA),
- la structure de programme de commande de système (STS) est formée par
-- un module de programme de commande de système (STP) gérant et surveillant l'adaptateur de communication (CA),
-- un module de programme Watchdog (WAP) surveillant le Watchdog
-- et un module de programme de test (MOP) équipé de fonctions de détection, d'indication et de branchement afin de tester l'adaptateur de communication (CA),
- la structure de programme de transfert de messages (MTS) est formée par
-- un module de programme de transfert de données (DTP) commandant le message du point de vue de la technique de commutation,
-- un module de programme de transmission de données (LAY2) mettant en oeuvre la sécurité de données ou liaison de données, et
-- un module de programme de ligne (LH) commandant la technique de transmission physique.

5. Système de communication selon l'une des revendications 1 à 4,
caractérisé par le fait que, dans le dispositif de commande (CB),
- la structure de programme technique de commutation (CP) est formée par
- un module de sous-programme de commutation (CPS) mettant en oeuvre la fonction de commutation pour relier des dispositifs de communication (KE) raccordés,
-- un module de programme de moniteur (MOD) mettant en oeuvre l'interface pour la structure de programme technique de sécurité et d'exploitation,
-- un module de sous-programme de signalisation (SIS3) mettant en oeuvre un protocole de signalisation d'abonné ATM du dispositif de commande (CB) et
-- un module de sous-programme de commutation logique (LSS) provoquant la commutation logique de deux terminaux de communication ATM (KE)
-- et d'autres modules de programmes (EXH, CPD, CPR) pour la gestion de données et ressources techniques de commutation ainsi que pour le traitement de messages d'erreurs,
dans le dispositif de commutation (SB),
- la structure de sous-programme technique de commutation (CP-SB) est formée par
-- un module de sous-programme de commutation physique (PSS) provoquant l'interconnexion physique entre deux terminaux de communication ATM (KE),
-- un autre module de sous-programme de signalisation (SIS2) sécurisant le trafic de messages et
-- un module de programme de matériel (SHW) représentant le maillon vers la technique des circuits.
